# EUROPEAN PATENT SPECIFICATION

(11) **EP 1 547 011 B1**
(45) Date of publication and mention of the grant of the patent: **03.06.2009**
(21) Application number: 03732763.2
(22) Date of filing: 25.04.2003
(51) Int. Cl.: G06F 3/048, G06F 1/16, H04M 1/725, H04M 1/247

(54) **A MOBILE DEVICE FOR DISPLAYING INFORMATION CONTENT**
MOBILE EINRICHTUNG ZUM ANZEIGEN VON INFORMATIONSINHALTEN
DISPOSITIF MOBILE POUR AFFICHAGE DE CONTENU D'INFORMATIONS

(30) Priority: 03.10.2002 FI 20021759
(43) Date of publication of application: 29.06.2005
(60) Divisional application: 07020126.4
(73) Proprietor: Nokia Corporation, 02150 Espoo (FI)
(72) Inventor: BALLE, Henrik, DK-2500 Copenhagen V (DK); HARD, John, S-214 38 Malmö (SE)
(74) Representative: Higgin, Paul
(86) International application number: PCT/IB2003/001974
(87) International publication number: WO 2004/032053

(56) References cited:
- EP-A2- 1 052 598
- EP-A2- 1 191 768
- WO-A2-01/86920
- GB-A- 2 358 515
- US-A1- 2002 033 836

## Description

### FIELD OF THE INVENTION

Embodiments of the invention relate to a mobile device for displaying information content.

### BACKGROUND TO THE INVENTION

Current mobile devices display information content in a manner determined at manufacture. Some mobile devices have two physically distinct configurations where the whole of the display is used in 'portrait' for one configuration and the whole of the display is used in 'landscape' in the other configuration. A dedicated hardware switch detects when the user converts the device between configurations by, for example, opening or folding the device.

US 2002/0033836 discloses a method for the converting the display of a portable electronic device from a first display orientation and/or configuration to a second orientation and/or configuration via a single action. The device provides a "one-touch" or single-action change in the orientation and/or configuration of the viewing area of the display via a hard key, a soft key, or an orientation sensing/switching device within the electronic device.

EP 1191768 discloses two different screens which are at 90 degree orientations to each other and are driven so that the same image or a section thereof is displayed with respect to the screen orientation. The orientation may be selected by a key or speech input made by a user.

It would be desirable to allow the manner in which information is presented by the mobile device to be varied as and when is suitable. In particular, it would be desirable to allow a user flexibility in controlling the variation.

### BRIEF DESCRIPTION OF THE INVENTION

The invention is defined in the appended claims. According to a first embodiment there is provided a device as claimed in claim 1.

According to a second embodiment there is provided a method as claimed in claim 12.

According to a third embodiment, there is provided a computer program as claimed in claim 15.

The orientation of the information content independently of the control content allows information to be presented the correct way up without changing the orientation of the mobile device and without affecting the functionality of the device.

The software control of the orientation of the information content may be incorporated within the game-play of a game played by a user on the mobile device. It may also enable the handedness of the mobile device to be changed, so that it can be switched from right-handed use to left-handed use.

The term information content includes map images, photographic images, alphanumeric text messages and images from games.

### BRIEF DESCRIPTION OF THE DRAWINGS

For a better understanding of the present invention reference will now be made by way of example only to the accompanying drawings in which:
Fig. 1 schematically illustrates a hand-held mobile device 10 for displaying information to a user.
Fig. 2 illustrates one possible user interface for the mobile device 10
Figs 3A, 3B and 3C illustrate the successive rotation of the information content without rotation of control content;
Figs 4A, 4B, 4C and 4D illustrate the successive rotation of the information content with rotation of control content;
Figs 5A, 5B, 5C and 5D illustrate the successive rotation of the information content with rotation and interchange of control content; and
Figs 6A, 6B, 6C illustrate the successive reduction in size of a display area with each actuation of the user input device.

### DETAILED DESCRIPTION OF EMBODIMENTS OF THE INVENTION

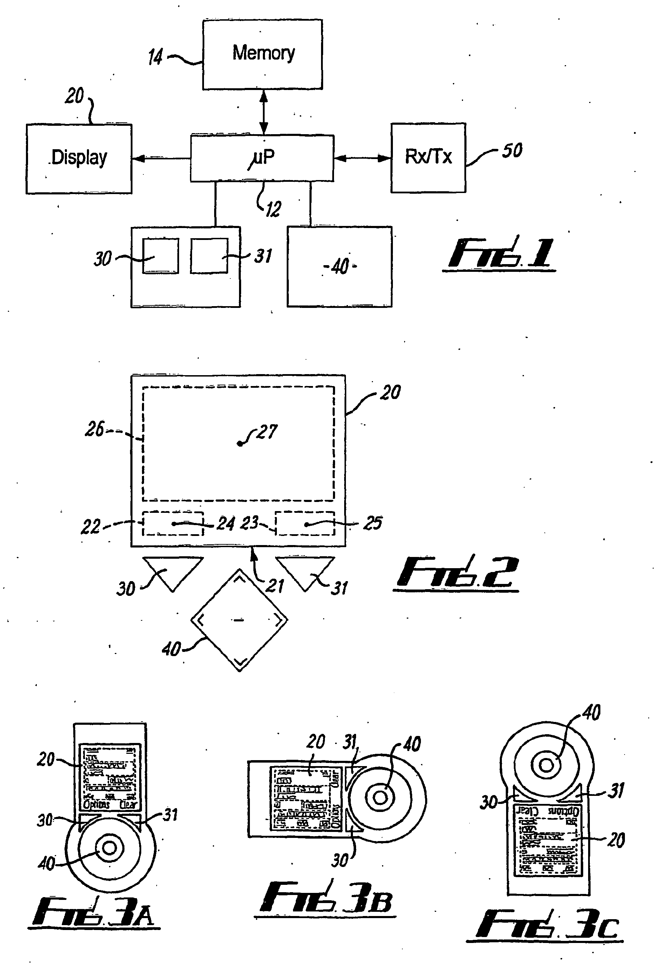

Fig. 1 schematically illustrates a hand-held mobile device 10 for displaying information to a user. The mobile device 10 may be a personal digital assistant, a mobile telephone or the like. The mobile device 10 illustrated in this example is a mobile telephone.

The mobile device 10 comprises: a processor 12; a memory 14; a display 20; a first input key 30 and a second input key 31; a user input device 40; and a radio frequency transceiver 50.

The processor 12 receives input from the first input key 30, the second input key 31, the user input device 40 and the radio frequency transceiver 50. The processor 12 provides outputs to the display 20 and the radio frequency transceiver 50. The processor 12 can also read from and write to the memory 14.

The operation of the mobile device 10 is controlled by software computer program instructions loaded into the processor 12 from the memory 14.

Fig. 2 illustrates one possible user interface for the mobile device 10. The first input key 30 and the second input key 31 are located between the user input device 40 and the display 20, adjacent an edge 21 of the display 20. The user input device 40 is, in this example, a five-way input key but it could be any suitable type of input device such as a joystick or a rotator dial. The function of the user input device 40 is not dedicated as the processor 12 is operable to vary its function under the control of the software loaded into the processor 12.

The display 20 has a first portion 22 and a second portion 23 at the edge 21 adjacent the first input key 30 and the second input key 31 respectively. The first portion 22 is an array of pixels centred at a first off-centre origin 24. The second portion 23 is an array of pixels centred at a second off-centre origin 25. The display 20 also has a central display area 26 centred on an origin 27 towards the centre of the display 20.

The display is controlled by the processor 12 to display content This content may include information content that is displayed in the central display area 26 and first and second control content that is displayed in the first and second portions 22, 23 respectively.

The first control content displayed in the first display portion 22, indicates the function of the adjacent first input key 30 associated with that display portion. The first input key 30 is a "soft" or programmable key. The processor 12 is operable, under the control of the loaded software, to change the function of the first input key 30 and to simultaneously change the first control content to indicate the new function of the first input key 30 to a user.

The second control content displayed in the second display portion 23, indicates the function of the adjacent second input key 31 associated with that display portion. The second input key 31 is a "soft" or programmable key. The processor 12 is operable, under the control of the loaded software, to change the function of the second input key 31 and to simultaneously change the second control content to indicate the new function of the second input key 31 to a user.

The information content displayable in the central display area 26 conveys information to the user as opposed to describing the functions or operating conditions of the device. The information content may be images produced while playing a game, a photographic image, text, a map, content received from another user via the radio frequency transceiver 50, content composed by the user etc.

The orientation of the displayed information content can be controlled by a user of the device 10. Depending upon how this feature is implemented, the user may rotate the information content within a fixed display area or may rotate a display area where the orientation of the information content is fixed within the display area. In the following, the latter implementation will be described, although this is not intended to limit the invention as claimed. The display area 26 is preferably, but not necessarily square.

The processor 12 controls the display 20. It is operable, when in a user selected "rotating mode", to respond to user input via the user input device to rotate the display area 26 in increments of ninety degree. The user can therefore, with successive actuations of the user input device 40, change the orientation of the information content. Figs 3A, 3B, and 3C illustrate the successive rotation of the information content about the central origin 27 by 90 degree increments in the clockwise direction. In this example the user input device 40 is a rotator wheel and turning the rotator wheel in a clockwise direction rotates the information content in clockwise increments of 90 degrees and turning the rotator wheel in an anti-clockwise direction rotates the information content in anti-clockwise increments of 90 degrees.

As the processor varies the orientation of the information content, the first and second control content remains in the first and second portions 22, 23 of the display adjacent their associated input keys 30, 31.

In the embodiment illustrated in Figs 3A to 3C, the control content has a fixed position and a fixed orientation.

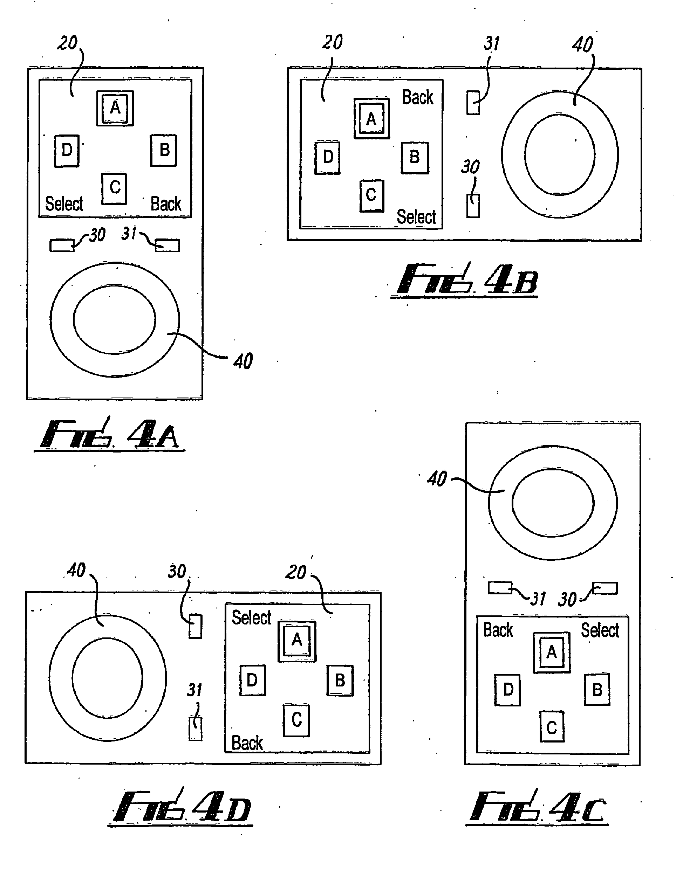

In another embodiment illustrated in Figs 4A to 4D, the processor, is operable to rotate the first and second control content about their respective first and second off-centre origins 24, 25 synchronously with the rotation of the information content. The incremental rotations of the first and second control content is at the same time, in the same direction and by the same amount as the incremental rotations of the information content. The origins 27, 24 and 25 may be fixed or may be translated slightly with each incremental rotation. Figs 4A, 4B, 4C and 4D illustrate the successive rotation of the information content with rotation, but without movement or interchange of control content. Thus the 'negative' action, which is "back" in this example is always associated with the same, second input key 32 and the 'affirmative' action, which is "select" in this example is always associated with the same, first input key 31. The orientation of "back" and "select" are, however, varied as the orientation of the information content varies.

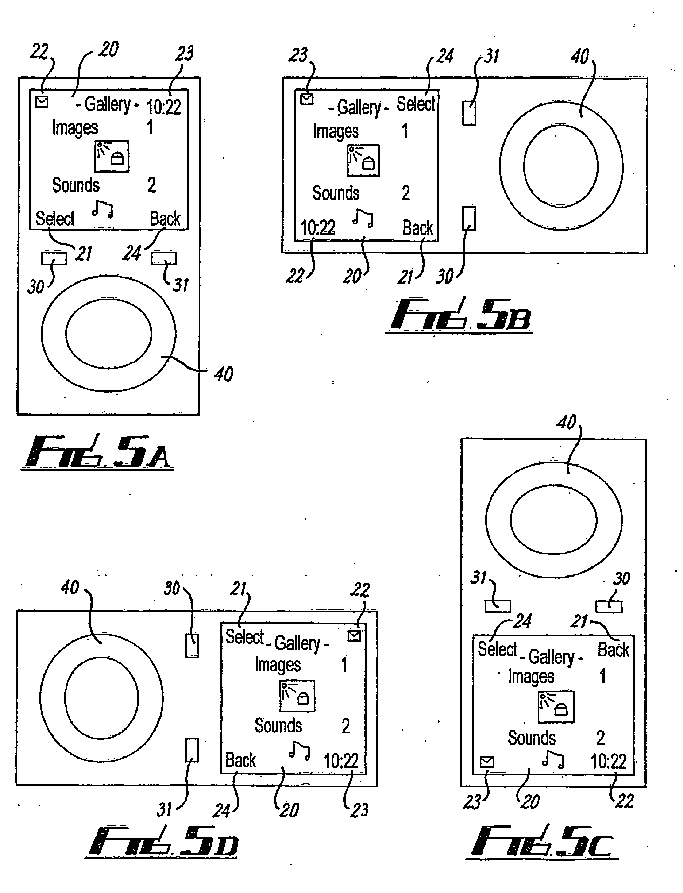

In another embodiment illustrated in Figs 5A to 5D, the processor, is operable to rotate control content associated with the first and second input keys 30, 31 synchronously with the rotation of the information content and also interchange the functions (and therefore the control content) associated with the first and second input keys 30, 31. The incremental rotations of the control content is at the same time, in the same direction and by the same amount as the incremental rotations of the information content. In these Figs. there are four separate control content elements "select", a mail icon, a time indicator and "Back" located at four separate corners 21, 22, 23 and 24 of the display. As the information content is rotated the control content elements are interchanged between the corners 21, 22, 23 and 24. Thus in Figs 5A and 5D, the first input key is associated with the control content element "Select" and in Figs 5B and 5C it is associated with the "Back" control content element.

Therefore, before the change in orientation of the information content the first input key has a first function and is associated with first control content displayed adjacent it and the second input key has a second function and is associated with second control content displayed adjacent it and after the change in orientation of the information content the first input key has the second function and is associated with the second control content displayed adjacent it and the second input key has the first function and is associated with the first control content displayed adjacent it.

The variation of the orientation of the information content and control content can occur while it is being displayed.

Alternatively, or in addition to the variation of the orientation of the information content, the size of the display area 26 may be varied by the user.

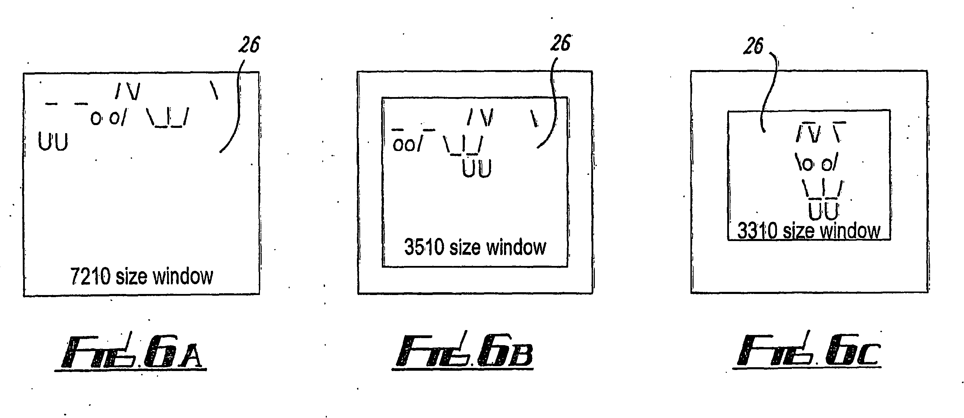

The processor 12 controls the display 20. It is operable, when in a user selected "resizing mode", to respond to user input via the user input device to change the size of the display area 26 incrementally. The user can therefore, with successive actuations of the user input device 40, change the size of the display area. Figs. 6A, 6B, and 6C illustrate the successive reduction in size of display area 26 with each actuation of the user input device. The user input device may be a rotator wheel. Turning the rotator wheel in a clockwise direction reduces the display area 26. Turning the rotator wheel in anti-clockwise direction increases the display area 26.

In Fig 6A, the display area 26 is at full size. The device 10 in this example is a NOKIA ® 7210 mobile telephone. An alphanumeric text message, which has been composed on a NOKIA® 3310 mobile telephone and received by the mobile device 10 via the radio frequency transceiver 50, is displayed using a text message reader application. The message is displayed as information content in the display area 26. The user enters the "resizing mode" and actuates the user input device 40. The processor 12 responds by reducing the size of the display area 26 to that of a NOKIA® 3510 mobile telephone, which has a lower resolution of display than the NOKIA ® 7210 mobile telephone as illustrated in Fig. 6B. The user then actuates the user input device 40 again and the processor 12 responds by reducing the size of the display area 26 to that of a NOKIA® 3310 mobile telephone, which has a lower resolution of display than the NOKIA ® 3510 mobile telephone as illustrated in Fig. 6C. This reduction of the display area 26 recreates the alphanumeric text message in the form in which it was composed.

The incremental changes to the display area 26 with each actuation of the user input device 40 are predetermined. The incremental changes to the display area are performed while displaying the information content. The areas of the display outside the display area may be disabled to conserve power.

In another implementation, the information content originates in the mobile device 10 and not from another device. The processor 12, provides a text message composing application in which the display area is the area in which the message can be composed.

In other implementations it is possible for the resizing of the display area to be automatic or semi-automatic. The mobile device 10 may determine the correct display area 26 for received information content from a parameter received with the information content. The parameter may indicate the display area in which the message was composed, for example. The mobile device 10 may determine the correct display area 26 in which to compose information content for transmission to a particular person, from a parameter stored in the mobile device. The parameter may, for example, indicate the maximum size of display area of the mobile device of that user. The mobile device 10 may automatically adjust the display area size to the correct size or it may give the user the option of switch to the correct display area size.

Although embodiments of the present invention have been described in the preceding paragraphs with reference to various examples, it should be appreciated that modifications to the examples given can be made without departing from the scope of the invention as claimed.

## Claims

1. A device (10), comprising:
a display;
first (30) and second (31) input keys associated with the display;
the display (20) being configured to display information content with a first orientation, to display first control content, adjacent the first input key (30), indicating that the first input key (30) has a first function, and to display second control content, adjacent the second input key (31), indicating that the second input key (31) has a second function; and
a processor (12) configured to change the first orientation of the displayed information content to a second orientation, different to the first orientation, and to interchange the first function and the second function, such that the second input key (31) has the first function and the first control content is displayed adjacent the second input key (31), and such that the first input key (30) has the second function and the second control content is displayed adjacent the first input key (30).

2. A device (10) as claimed in claim 1, further comprising a user input device (40), wherein the processor is configured to change the orientation of the information content in response to input from the user input device (40).

3. A device (10) as claimed in claim 2, wherein the functionality of the user input device (40) is controlled by the processor (12).

4. A device (10) as claimed in claim 1, 2 or 3, wherein the processor (12) is configured to change the orientation of the information content between four predetermined orientations.

5. A device (10) as claimed in any preceding claim, wherein the processor (12) is arranged to change the orientation of the information content by successive increments of 90 degrees rotation about a first origin in the display (20).

6. A device (10) as claimed in any preceding claim, wherein the processor (12), is configured to change the orientation of the information content while it is displayed.

7. A device (10) as claimed in any preceding claim wherein the first and second control content for the first and second input keys (30, 31) varies as the functions of the first and second input keys are varied by the processor (12).

8. A device (10) as claimed in any preceding claim wherein the control content has a fixed orientation with respect to the device (10).

9. A device (10) as claimed in any one of claims 1 to 7, wherein the processor (12) is configured to rotate the information content about a first origin and simultaneously rotate the control content about a second different origin, by ninety degrees.

10. A device (10) as claimed in claim 9, wherein the processor (12) is configured to simultaneously rotate the information content and the control content, in response to input from a user input device (40).

11. A device (10) as claimed in claim 9 or 10, wherein the first origin and the second origin are fixed.

12. A method, comprising:
displaying information content with a first orientation, first control content adjacent a first input key (30), indicating that the first input key (30) has a first function, and second control content adjacent a second input key (31), indicating that the second input key (31) has a second function; and
changing the first orientation to a second, different, orientation and interchanging the first function and the second function, such that second input key (31) has the first function and the first control content is displayed adjacent the second input key (31), and such that the first input key (30) has the second function and the second control content is displayed adjacent the first input key (30).

13. A method as claimed in claim 12, wherein the step of changing the first orientation is performed in response to user input while displaying the information content.

14. A method as claimed in claim 12 or 13, further comprising the step of changing the control content and/or its orientation when changing the orientation of the information content.

15. A computer program that, when run on a processor, enables the method as claimed in any of claims 12 to 14 to be performed.

## Patentansprüche

1. Vorrichtung (10), umfassend:
- eine Anzeige;
- eine erste (30) und zweite (31) Eingabetaste, die mit der Anzeige verknüpft sind;
wobei die Anzeige (20) eingerichtet ist, einen Informationsinhalt mit einer ersten Ausrichtung anzuzeigen, ersten Steuerinhalt benachbart zu der ersten Eingabetaste (30) anzuzeigen, der anzeigt, dass die erste Eingabetaste (30) eine erste Funktion aufweist, und zweiten Steuerinhalt benachbart zu der zweiten Eingabetaste (31) anzuzeigen, der anzeigt, dass die zweite Eingabetaste (31) eine zweite Funktion aufweist; und
- einen Prozessor (12), der eingerichtet ist, die erste Ausrichtung des angezeigten Informationsinhalts in eine zweite Ausrichtung zu ändern, die von der ersten Ausrichtung verschieden ist, und die erste und die zweite Funktion auszutauschen, so dass die zweite Eingabetaste (31) die erste Funktion aufweist und der erste Steuerinhalt benachbart zu der zweiten Eingabetaste (31) angezeigt wird, und so dass die erste Eingabetaste (30) die zweite Funktion aufweist und der zweite Steuerinhalt benachbart zu der ersten Eingabetaste (30) angezeigt wird.

2. Vorrichtung (10) nach Anspruch 1, weiter umfassend eine Benutzereingabevorrichtung (40), wobei der Prozessor eingerichtet ist, die Ausrichtung des Informationsinhalts in Reaktion auf eine Eingabe von der Benutzervorrichtung (40) zu ändern.

3. Vorrichtung (10) nach Anspruch 2, wobei die Funktion der Benutzereingabevorrichtung (40) durch den Prozessor (12) gesteuert wird.

4. Vorrichtung (10) nach Anspruch 1, 2 oder 3, wobei der Prozessor (12) eingerichtet ist, die Ausrichtung des Informationsinhalts zwischen vier vorbestimmten Ausrichtungen zu ändern.

5. Vorrichtung (10) nach irgendeinem vorhergehenden Anspruch, wobei der Prozessor (12) eingerichtet ist, die Ausrichtung des Informationsinhalts durch sukzessive Schritte von 90-Grad-Drehung um einen ersten Ausgangspunkt in der Anzeige (20) zu ändern.

6. Vorrichtung (10) nach irgendeinem der vorhergehenden Ansprüche, wobei der Prozessor (12) eingerichtet ist, die Ausrichtung des Informationsinhalts zu ändern, während er angezeigt wird.

7. Vorrichtung (10) nach irgendeinem vorhergehenden Anspruch, wobei der erste und der zweite Steuerinhalt für die erste und die zweite Eingabetaste (30, 31) so variiert, wie die Funktionen der ersten und zweiten Eingabetaste durch den Prozessor (12) variiert werden.

8. Vorrichtung (10) nach irgendeinem der vorhergehenden Ansprüche, wobei der Steuerinhalt eine feste Ausrichtung in Bezug auf die Vorrichtung (10) aufweist.

9. Vorrichtung (10) nach irgendeinem der Ansprüche 1 bis 7, wobei der Prozessor (12) eingerichtet ist, den Informationsinhalt um einen ersten Ausgangspunkt zu drehen und gleichzeitig den Steuerinhalt um einen unterschiedlichen zweiten Ausgangspunkt zu drehen, um 90 Grad.

10. Vorrichtung (10) nach Anspruch 9, wobei der Prozessor (12) eingerichtet ist, in Reaktion auf eine Eingabe von einer Benutzereingabevorrichtung (40) den Informationsinhalt und den Steuerinhalt gleichzeitig zu drehen.

11. Vorrichtung (10) nach Anspruch 9 oder 10, wobei der erste Ausgangspunkt und der zweite Ausgangspunkt fest sind.

12. Verfahren, umfassend:
- Anzeigen eines Informationsinhalts mit einer ersten Ausrichtung, ersten Steuerinhalts benachbart zu einer ersten Eingabetaste (30), der anzeigt, dass die erste Eingabetaste (30) eine erste Funktion aufweist, und zweiten Steuerinhalts benachbart zu einer zweiten Eingabetaste (31), der anzeigt, dass die zweite Eingabetaste (31) eine zweite Funktion aufweist; und
- Ändern der ersten Ausrichtung zu einer zweiten, davon verschiedenen Ausrichtung, und Austauschen der ersten Funktion und der zweiten Funktion, so dass die zweite Eingabetaste (31) die erste Funktion aufweist und der erste Steuerinhalt benachbart zu der zweiten Eingabetaste (31) angezeigt wird, und so dass die erste Eingabetaste (30) die zweite Funktion aufweist und der zweite Steuerinhalt benachbart zu der ersten Eingabetaste (30) angezeigt wird.

13. Verfahren nach Anspruch 12, wobei der Schritt des Änderns der ersten Ausrichtung in Reaktion auf eine Benutzereingabe ausgeführt wird, während der Informationsinhalt angezeigt wird.

14. Verfahren nach Anspruch 12 oder 13, weiter umfassend den Schritt des Änderns des Steuerinhalts und/oder seiner Ausrichtung, wenn die Ausrichtung des Informationsinhalts geändert wird.

15. Computerprogramm das, wenn es auf einem Prozessor ausgeführt wird, ermöglicht, dass das Verfahren nach irgendeinem der Ansprüche 12 bis 14 ausgeführt wird.

## Revendications

1. Dispositif (10), comprenant :
un affichage ;
des première (30) et deuxième (31) touches d'entrée associées à l'affichage ;
l'affichage (20) étant configuré pour afficher un contenu d'information avec une première orientation, pour afficher un premier contenu de commande, adjacent à la première touche d'entrée (30), indiquant que la première touche d'entrée (30) a une première fonction, et pour afficher un deuxième contenu de commande, adjacent à la deuxième touche d'entrée (31), indiquant que la deuxième touche d'entrée (31) a une deuxième fonction ; et
un processeur (12) configuré pour changer la première orientation du contenu d'information affiché par une deuxième orientation, différente de la première orientation, et pour inverser la première fonction et la deuxième fonction, de sorte que la deuxième touche d'entrée (31) ait la première fonction et que le premier contenu de commande soit affiché adjacent à la deuxième touche d'entrée (31), et de sorte que la première touche d'entrée (30) ait la deuxième fonction et le deuxième contenu de commande soit affiché adjacent à la première touche d'entrée (30).

2. Dispositif (10) selon la revendication 1, comprenant en outre un dispositif d'entrée d'utilisateur (40), dans lequel le processeur est configuré pour changer l'orientation du contenu d'information en réponse à une entrée du dispositif d'entrée d'utilisateur (40).

3. Dispositif (10) selon la revendication 2, dans lequel la fonctionnalité du dispositif d'entrée d'utilisateur (40) est commandée par le processeur (12).

4. Dispositif (10) selon la revendication 1, 2 ou 3, dans lequel le processeur (12) est configuré pour changer l'orientation du contenu d'information entre quatre orientations prédéterminées.

5. Dispositif (10) selon l'une quelconque des revendications précédentes, dans lequel le processeur (12) est agencé pour changer l'orientation du contenu d'information par des incréments successifs de 90° de rotation autour d'une première origine dans l'affichage (20).

6. Dispositif (10) selon l'une quelconque des revendications précédentes, dans lequel le processeur (12) est configuré pour changer l'orientation du contenu d'information pendant qu'il est affiché.

7. Dispositif (10) selon l'une quelconque des revendications précédentes, dans lequel les premier et deuxième contenus de commande pour les première et deuxième touches d'entrée (30, 31) varient lorsque le processeur (12) fait varier les fonctions des première et deuxième touches d'entrée.

8. Dispositif (10) selon l'une quelconque des revendications précédentes, dans lequel le contenu de commande a une orientation fixe par rapport au dispositif (10).

9. Dispositif (10) selon l'une quelconque des revendications 1 à 7, dans lequel le processeur (12) est configuré pour faire tourner le contenu d'information autour d'une première origine et pour faire tourner simultanément le contenu de commande autour d'une deuxième origine différente de 90°.

10. Dispositif (10) selon la revendication 9, dans lequel le processeur (12) est configuré pour faire tourner simultanément le contenu d'information et le contenu de commande en réponse à l'entrée d'un dispositif d'entrée d'utilisateur (40).

11. Dispositif (10) selon la revendication 9 ou 10, dans lequel la première origine et la deuxième origine sont fixes.

12. Procédé comprenant les étapes consistant à :
afficher un contenu d'information avec une première orientation, un premier contenu de commande adjacent à une première touche d'entrée (30), indiquant que la première touche d'entrée (30) a une première fonction, et un deuxième contenu de commande adjacent à une deuxième touche d'entrée (31) indiquant que la deuxième touche d'entrée (31) a une deuxième fonction ; et
changer la première orientation par une deuxième orientation différente et inverser la première fonction et la deuxième fonction, de sorte que la deuxième touche d'entrée (31) ait la première fonction et le premier contenu de commande soit affiché adjacent à la deuxième touche d'entrée (31), et de sorte que la première touche d'entrée (30) ait la deuxième fonction et le deuxième contenu de commande soit affiché adjacent à la première touche d'entrée (30).

13. Procédé selon la revendication 12, dans lequel l'étape de changement de la première orientation est effectuée en réponse à une entrée d'utilisateur pendant l'affichage du contenu d'information.

14. Procédé selon la revendication 12 ou 13, comprenant en outre l'étape consistant à changer le contenu de commande et/ou son orientation en changeant l'orientation du contenu d'information.

15. Programme d'ordinateur qui, lorsqu'il est exécuté sur un processeur, permet d'effectuer le procédé selon l'une quelconque des revendications 12 à 14.
